# DEMANDE DE BREVET EUROPEEN

(11) **EP 4 235 633 A1**
(43) Date de publication de la demande: **30.08.2023**
(21) Numéro de dépôt: 23158159.6
(22) Date de dépôt: 23.02.2023
(51) Int. Cl.: G09B 23/36, G09B 23/32, G09B 23/34

(54) **MANNEQUIN D'APPRENTISSAGE A LA DISLOCATION CERVICALE MANUELLE DES OISEAUX**

(30) Priorité: 23.02.2022 FR 2201617
(71) Demandeur: Elevage Service, 40500 Saint Sever (FR)
(72) Inventeur: ZANCAN, Laurence, 64000 PAU (FR); RODINGER, Jean-Charles, 75020 PARIS (FR)
(74) Mandataire: A.P.I. Conseil

(57) **Abrégé**

Mannequin d'entrainement (1) à la dislocation cervicale manuelle d'un oiseau comprenant :
- un élément définissant un cou (4) et un élément définissant une tête (5) connectés l'un à l'autre par un moyen de fixation séparable (6), comprenant au moins un premier élément (61) solidaire de la tête (5) et au moins un deuxième élément (62) solidaire du cou (4), lesdits éléments (61, 62) étant agencés de sorte à connecter de façon réversible ledit cou (4) à ladite tête (5),
- lesdits éléments (61, 62) du moyen de fixation séparable (6) sont agencés de manière à permettre le déplacement de la tête (5) vers la face arrière du mannequin d'entrainement (1), et
- le premier et le deuxième élément (61, 62) du moyen de fixation séparable (6) étant adaptés pour se désolidariser lorsqu'une force prédéterminée est appliquée sur la tête parallèlement à l'axe longitudinal du cou (4).

## Description

L'invention concerne le domaine des mannequins d'entrainement à la pratique vétérinaire. Plus particulièrement, le mannequin de l'invention permet l'entrainement à l'euthanasie des oiseaux par dislocation cervicale manuelle. L'invention concerne également un procédé d'entrainement à l'aide du mannequin de l'invention.

### Art antérieur

L'euthanasie est un volet essentiel de l'élevage agricole ou expérimental et du soin vétérinaire. Le bien-être des animaux est une valeur d'une importance croissante pour les sociétés occidentales, particulièrement au moment de leur abattage ou de leur mise à mort. Cela est devenu une question d'intérêt public qui influe sur l'attitude des consommateurs à l'égard des élevages agricoles. En outre, le renforcement de la protection des animaux au moment de leur abattage contribue à améliorer la qualité de la viande et, indirectement, génère des effets positifs sur la sécurité professionnelle dans les abattoirs (RÈGLEMENT (CE) N° 1099/2009 du 24 septembre 2009). Dans les élevages, une euthanasie exécutée correctement et en temps utile réduit la souffrance d'un animal malade ou blessé et limite les souffrances inutiles.

Toute méthode d'euthanasie doit donc être appliquée avec respect et infliger une mort exempte de douleur et de détresse. La technique employée doit entraîner une mort certaine et instantanée de l'animal et être fiable (reproductible).

Concernant les oiseaux, différentes méthodes d'euthanasie existent. Le broyage des poussins est fortement remis en question dans de nombreux pays. De même, l'égorgement ou la décapitation sont de moins en moins acceptés, et posent des problèmes sanitaires et de sécurité de l'opérateur supplémentaires. L'inhalation de CO₂ nécessite un investissement élevé et s'applique généralement aux euthanasies de groupe. La percussion nécessite la contention de l'animal et peut également poser des problèmes de sécurité du personnel.

La dislocation cervicale permet une mort rapide de l'animal à un coût faible. Elle peut être réalisée à l'aide d'outils tels que des pinces dans lesquelles le cou de l'animal est introduit. Néanmoins, il est nécessaire que l'outil soit correctement placé et qu'une force suffisamment importante soit appliquée pour garantir une dislocation efficace, sans entrainer la décapitation. L'outil ne permet pas le ressenti de l'opérateur quant à la bonne localisation des mâchoires de la pince et à la force appliquée. Enfin, l'outil doit être adapté à la taille et au type d'oiseau euthanasié.

L'euthanasie par dislocation cervicale manuelle ne nécessite aucun outillage particulier, pas d'investissement, elle est efficace, rapide, s'applique avec discernement et évite les euthanasies de groupe. Néanmoins le geste est technique et doit être parfaitement opéré dans le souci du bien-être animal (sans souffrance et sacrifice inutiles d'animaux aux seules fins d'entrainement) et également de celui de l'opérateur devant répéter cet acte. Bien exécutée, cette technique résulte en la séparation du crâne de la première vertèbre, la lésion du tronc cérébral et une mort instantanée. Cependant, si la technique est mal exécutée, seules les structures osseuses sont lésées, et l'animal n'est pas euthanasié immédiatement ; il en résulte une souffrance pour l'animal inacceptable selon les normes actuelles.

Le respect du vivant rend impossible l'entrainement à ce geste sur des animaux vivants, et l'entrainement sur des cadavres d'animaux qui seraient morts dans d'autres circonstances est difficile à mettre en oeuvre. Cependant, l'entrainement dans des conditions les plus proches possible du réel est nécessaire, car la simple visualisation du geste ne suffit pas et il est important que l'opérateur s'entraîne à exercer ce geste et intègre autant que de possible des sensations proches de celles ressenties, notamment la résistance de l'articulation telle qu'est est ressentie par le manipulateur et le dosage de la force nécessaire à appliquer pour réaliser une dislocation de manière adéquate.

Le mannequin selon l'invention comble ce besoin en permettant cet entrainement répété et également un ressenti de la dislocation proche de l'acte réel.

### Problème technique

L'invention a donc pour but de remédier aux inconvénients de l'art antérieur. En particulier, le dispositif de l'invention reproduit la sensation de l'opérateur lors du geste de dislocation, notamment la rupture brusque (après une première résistance) de la colonne vertébrale au niveau de la tête de l'animal. Le dispositif de l'invention permet non seulement au manipulateur d'acquérir le geste technique mais également d'apprendre à doser la force à appliquer en fonction de son ressenti, pour aboutir à une dislocation efficace, sans décapitation. Le mannequin selon l'invention permet en outre de vérifier la dislocation et donc que le geste a bien été effectué et, par-là, la validation du geste.

Le dispositif selon l'invention permet donc l'entrainement de l'opérateur, dans le respect de la condition animale (en évitant le sacrifice et la souffrance inutile d'animaux) et également, en optimisant le geste de l'opérateur, une diminution des erreurs et donc une diminution de la souffrance animale et également des conséquences psychologiques pour l'opérateur et la fatigue de l'opérateur. L'ensemble constitue un cercle vertueux et promeut des euthanasies raisonnées, en évitant les euthanasies groupées.

Un autre objectif de la présente invention est de fournir un procédé d'entrainement à la dislocation cervicale permettant l'acquisition de ce geste technique par l'opérateur.

### Brève description de l'invention

L'invention vise à pallier ces inconvénients.

L'invention vise en particulier un mannequin d'entrainement à la dislocation cervicale manuelle d'un oiseau comprenant :
- un élément de préhension définissant les pattes de l'oiseau fixé à un élément définissant le corps de l'oiseau,
- le corps comprenant une face arrière définissant le dos et une face avant définissant le bréchet de l'oiseau , sur lequel est fixé un élément de connexion longiligne définissant le cou de l'oiseau,
- un élément de préhension définissant la tête de l'oiseau,
caractérisé en ce que
- ledit cou et ladite tête sont connectés l'un à l'autre par un moyen de fixation séparable comprenant au moins un premier élément solidaire de la tête et au moins un deuxième élément solidaire du cou, lesdits premier et deuxième élément étant agencés de sorte à connecter de façon réversible ledit cou à ladite tête,
- lesdits au moins premier et deuxième éléments du moyen de fixation séparable sont agencés de manière à permettre le déplacement de la tête vers la face arrière du mannequin d'entrainement, et
- le premier et le deuxième élément du moyen de fixation séparable étant adaptés pour se désolidariser lorsqu'une force prédéterminée est appliquée sur la tête parallèlement à l'axe longitudinal du cou.

Un tel mannequin permet l'acquisition du geste propre à la dislocation cervicale dans les règles du respect animal susmentionnées, et avec la force appropriée, en permettant la répétition de ce geste par l'opérateur jusqu'à sa maîtrise.

Selon d'autres caractéristiques optionnelles du mannequin d'entrainement selon l'invention, ce dernier peut inclure facultativement une ou plusieurs des caractéristiques suivantes, seules ou en combinaison :
- le premier et/ou le deuxième élément du moyen de fixation séparable comprend un aimant permanent à aimantation axiale. En effet, les forces magnétiques reproduisent de manière particulièrement fidèle les sensations ressenties par le manipulateur dans les conditions réelles.
- le premier et le deuxième élément du moyen de fixation séparable comprennent chacun au moins un aimant permanent à aimantation axiale lesdits au moins un aimant étant agencés de manière à s'attirer mutuellement.
- le premier élément solidaire de la tête du moyen de fixation séparable comprend un support comprenant deux faces présentant chacune une face aimantée d'au moins un aimant permanent à aimantation axiale, le deuxième élément solidaire du cou du moyen de fixation séparable comprend deux bras définissant un espace, entre les bras, apte à recevoir le support, chacun des bras comprenant un aimant permanent à aimantation axiale,
l'aimant de chacun des bras, étant agencé de manière à attirer la face aimantée de l'au moins un aimant du support qui lui fait face quand le support est placé entre les bras. Cette configuration reproduit de manière particulièrement fiable les sensations perçues lors de la dislocation cervicale d'un oiseau.
- chacun des aimants permanents a une force de cisaillement comprise entre 1,23 N et 24,52 N, de préférence de 11,77 N.
- le moyen de fixation séparable comprend un moyen empêchant la dissociation du premier et du deuxième élément si l'angle entre la tête et l'axe du cou, vers l'arrière du mannequin d'entrainement n'est pas compris entre 80° et 100°. En obligeant le manipulateur du mannequin à effectuer ce geste, cela contribue l'amélioration de l'apprentissage du geste de dislocation cervicale qui nécessite une telle manipulation dans les conditions réelles.
- Il comprend en outre au moins un moyen permettant de maintenir la cohésion de la tête avec le mannequin d'entrainement une fois les premier et deuxième éléments dissociés. Un tel moyen permet d'avoir un mannequin permettant l'apprentissage d'un geste plus en accord avec la réalité de la dislocation cervicale qui ne doit pas aboutir à une décapitation de l'animal. En outre cela évite une perte de l'élément du mannequin définissant la tête et facilite le rétablissement de la connexion entre les éléments 61, 62 du moyen de fixation séparable, et donc la répétition de l'exercice par le manipulateur.
- le au moins un moyen qui permet de maintenir la cohésion de la tête avec le mannequin d'entrainement comprend un câble fixé, d'une part, au corps ou au cou et, d'autre part, à la tête.
- le au moins un moyen qui permet de maintenir la cohésion de la tête avec le mannequin d'entrainement comprend au moins un ressort fixé ou relié, à une de ses extrémités, au corps ou au cou et, à l'autre de ses extrémités, à la tête. Au moins un ressort permet à l'opérateur de ressentir une légère suspension et a donc pour effet d'atténuer la sensation mécanique ressentie lors de la séparation des éléments 61, 62 de l'élément de fixation séparable. Il reproduit également la sensation d'élasticité et la sensation de résistance des tissus de l'animal ressenties lors de la dislocation cervicale. Il complète ainsi l'expérience de l'opérateur qui s'entraine avec le mannequin de l'invention.
- le au moins un premier élément et/ou le au moins un deuxième élément comprend un témoin indicateur de la séparation de la tête et du cou, tel qu'un indicateur visuel uniquement visible à la séparation desdits éléments. Cet indicateur permet de valider le geste en permettant aisément la visualisation de la séparation des éléments 61,62 de l'élément de fixation séparable.

Selon un deuxième objet, l'invention porte sur un procédé d'entrainement à la dislocation cervicale manuelle d'un oiseau comprenant au moins un essai, comprenant les étapes suivantes :
- Fourniture d'un mannequin d'entrainement selon l'invention,
- Maintenir les pattes du mannequin d'entrainement dans une main et la tête du mannequin d'entrainement dans l'autre main, le pouce et l'index ou l'index et le majeur de la main positionnée sur la tête du mannequin étant positionnés sur la tête de part et d'autre du cou, le mannequin d'entrainement étant maintenu selon l'axe vertical, la tête en bas et les pattes en haut et de manière à ce que le dos du mannequin d'entrainement soit positionné vers la main qui tient la tête du mannequin d'entrainement,
- Plier le cou du mannequin d'entrainement à 90° vers l'arrière du mannequin d'entrainement,
- Exercer une traction de la tête du mannequin d'entrainement vers le bas tout en maintenant la pliure du cou du mannequin d'entrainement à 90° jusqu'à la séparation du moyen de fixation séparable au niveau de la jonction entre la tête et le cou,
- Vérifier la présence d'une dépression dans le cou à la base de la tête,
- Optionnellement : vérifier la visibilité de l'indicateur visuel,
- Optionnellement : remettre en place la connexion de la tête avec le cou via le moyen de fixation séparable,
dans lequel, en l'absence d'une dépression à la base de la tête, l'essai est invalidé.

D'autres avantages et caractéristiques de l'invention apparaitront à la lecture de la description suivante donnée à titre d'exemple illustratif et non limitatif, en référence aux Figures annexées qui représentent :

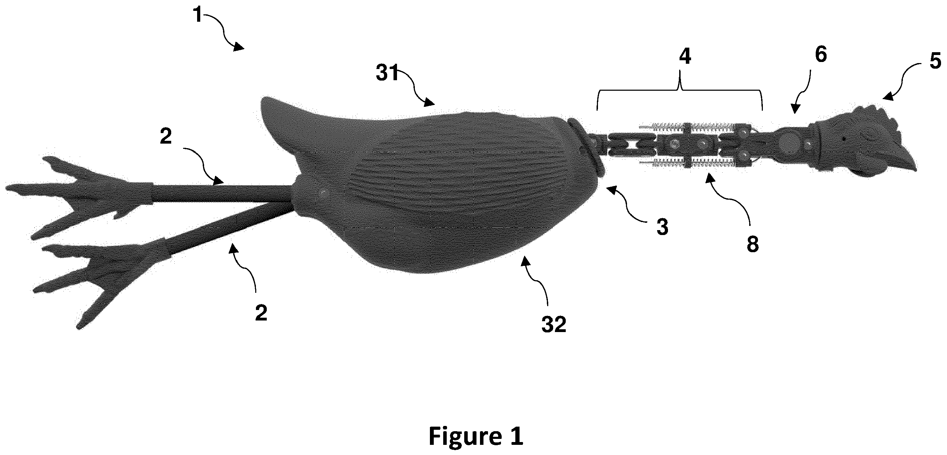

La figure 1 représente un mannequin d'entrainement à la dislocation cervicale d'un oiseau selon un mode particulier de réalisation.

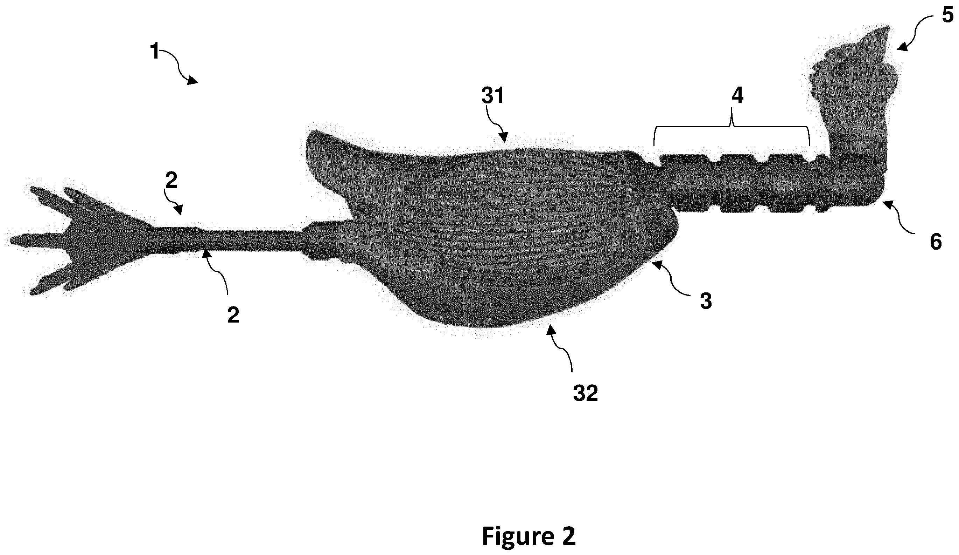

La figure 2 représente un mannequin d'entrainement à la dislocation cervicale d'un oiseau selon un mode réalisation particulier, la tête du mannequin étant positionnée vers l'arrière du mannequin.

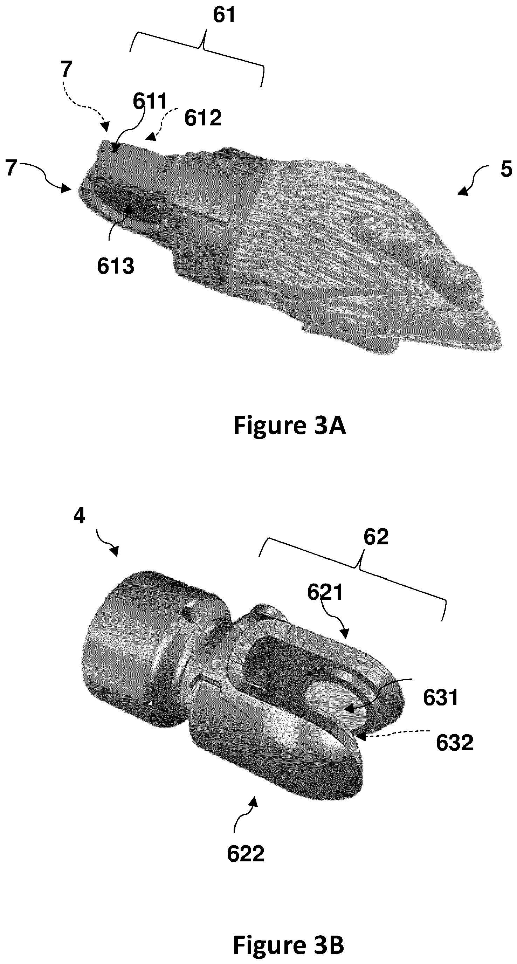

La figure 3A représente l'élément 62 du moyen de fixation séparable 6 séparé selon un mode de réalisation. La figure 3B représente l'élément 61 du moyen de fixation séparable 6 selon le même mode de réalisation et présentant un exemple d'un moyen 7 pour empêcher la dissociation de l'élément de fixation 6 dans ce mode de réalisation du moyen de fixation séparé 6.

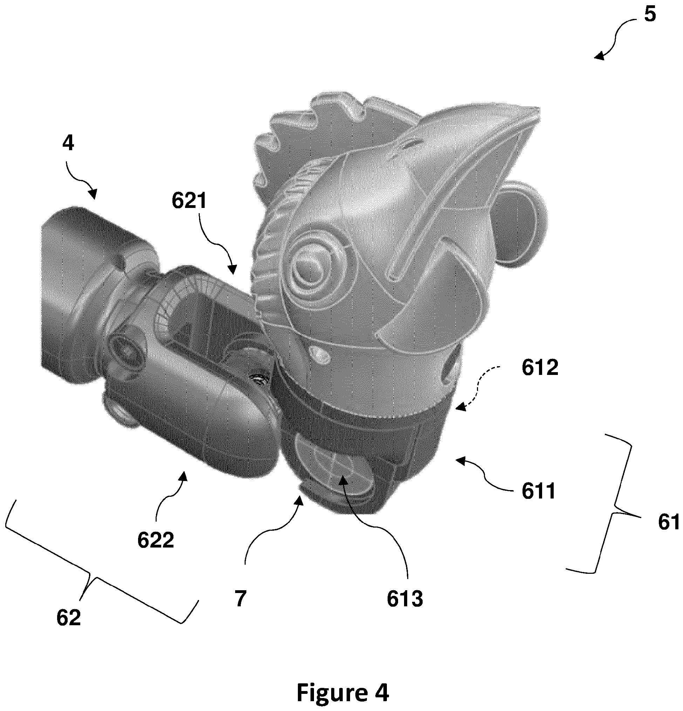

La figure 4 représente l'élément définissant la tête dans une configuration selon laquelle l'élément définissant la tête 5 est positionné à 90° par rapport à l'élément définissant le cou : Le support 611 est sorti de l'espace formé par les bras 621, 622 mettant au jour les faces aimantées 612, 613. L'élément définissant la tête est dans une configuration de dislocation cervicale.

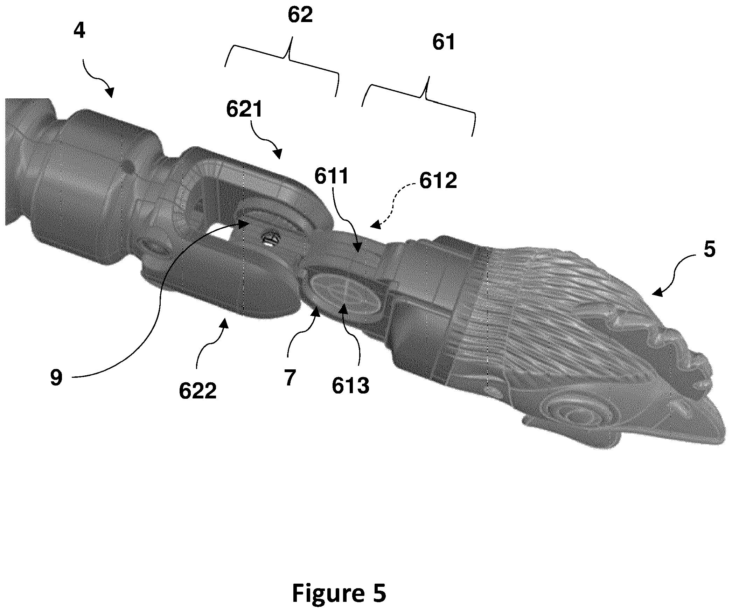

La figure 5 représente le détail d'un moyen de fixation séparable selon un mode de réalisation de l'invention, les éléments 61 et 62 du moyen de fixation séparable sont présentés dissociés et l'élément désignant la tête du mannequin est dans la configuration correspondant à la dislocation cervicale. Le support 611 est sorti de l'espace formé par les bras 621, 622 mettant au jour les faces aimantées 612, 613 et une dépression (ici une sous-épaisseur) entre l'élément définissant la tête 5 et l'élément définissant le cou 4. Dans le mode de réalisation illustré ici, le support 611 comprend à son extrémité un ou des aimants 9 agencés pour rester connectés (c'est-à-dire s'attirer mutuellement) avec les aimants des bras 621, 622.

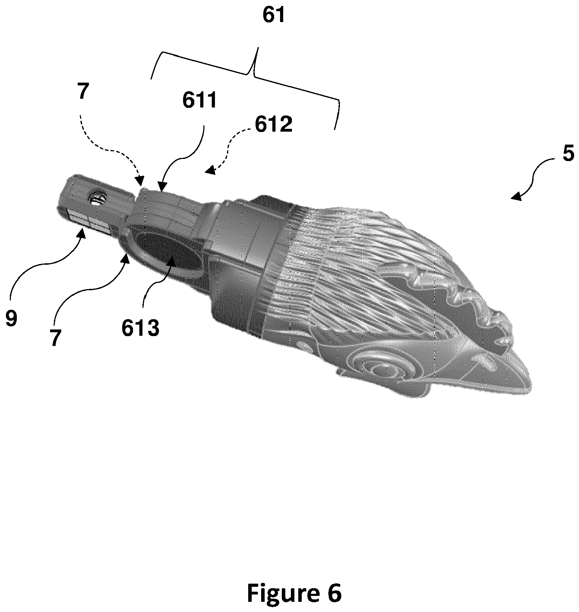

La figure 6 représente le détail d'un élément définissant la tête d'un oiseau selon un mode de réalisation de l'invention. Le support 611 comprend à son extrémité un ou des aimants 9 agencés pour rester connectés (c'est-à-dire s'attirer mutuellement) avec les aimants des bras 621, 622. Un trou est ménagé pour permettre le passage du câble ainsi fixé d'une part à l'élément définissant la tête et d'autre part à l'élément définissant le corps 3.

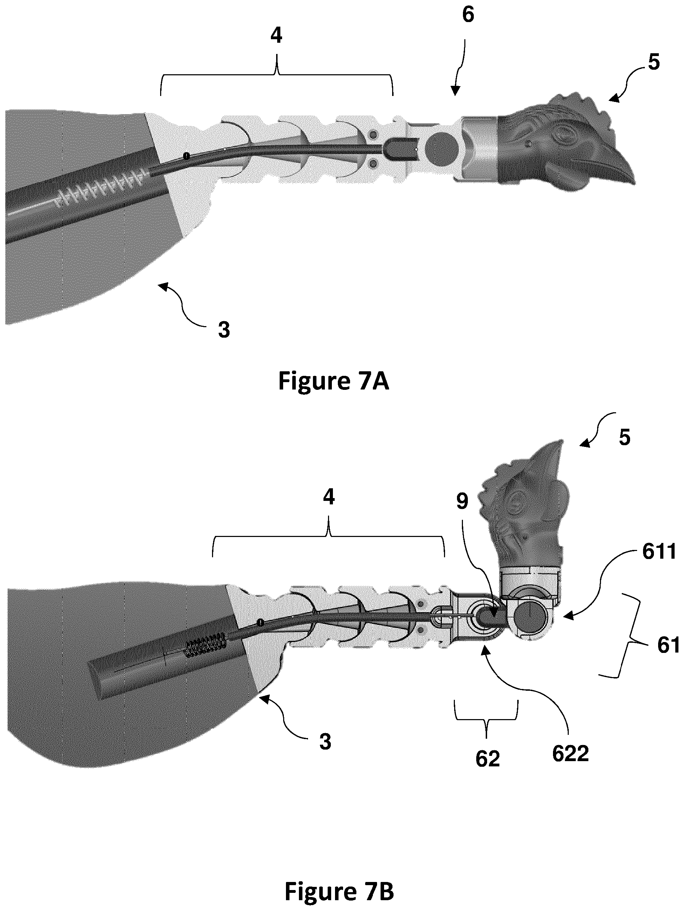

La figure 7A et 7B représente le détail d'un élément définissant la tête d'un oiseau selon un mode de réalisation de l'invention, tel que représenté à la figure 2. Sur un câble viennent s'enfiler des éléments articulés constituant l'élément de connexion définissant le cou 4. Le support 611 comprend à son extrémité un ou des aimants 9 agencés pour rester connectés (c'est-à-dire s'attirer mutuellement) avec les aimants des bras 621, 622. Le câble est fixé d'une part à l'élément définissant la tête et d'autre part à l'élément définissant le corps 3. Un ressort est situé à l'extrémité du câble située dans l'élément définissant le corps 3 de l'oiseau et agencé de telle sorte que ledit ressort est comprimé lors de la dislocation (la séparation) des éléments 61, 62 du moyen de fixation séparable 6 et donc lors la traction sur le câble, qui est fixé à son autre extrémité à un élément de l'élément définissant la tête tel que le support 611. La figure 7A représente le dispositif en configuration non disloquée ; la figure 7B représente le dispositif en configuration disloquée, l'élément figurant la tête est positionné à 90° vers l'arrière du dispositif.

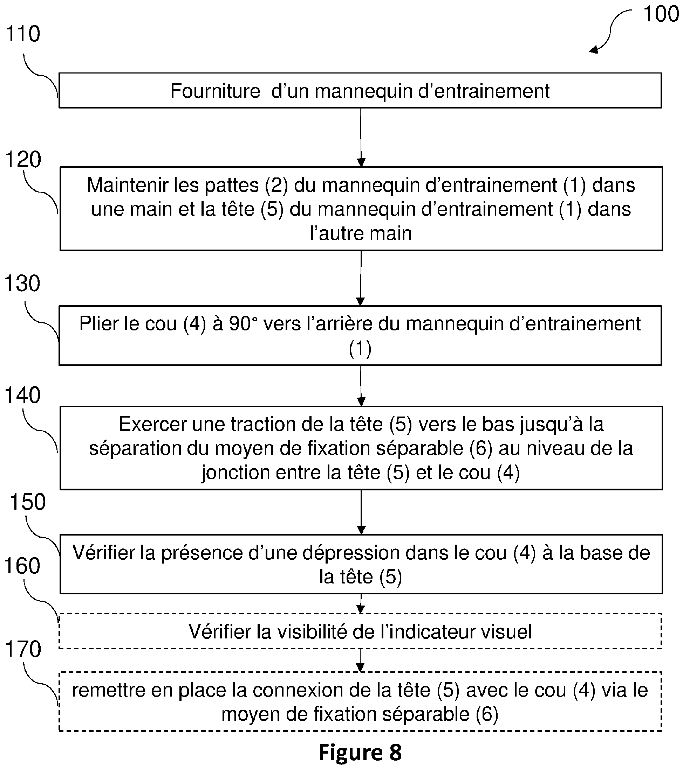

La figure 8 représente les étapes d'un essai dans un procédé d'apprentissage du geste d'euthanasie d'un oiseau par dislocation cervicale manuelle.

### Description de l'invention

### Définitions

Par « **oiseau** », au sens de l'invention, il faut comprendre tout animal de la classe taxonomique des Aves. Il s'agit, plus particulièrement, les oiseaux dont la taille et la morphologie rendent possible leur contention manuelle, de préférence tout oiseau d'une masse inférieure ou égale à 5 Kg. Il peut s'agir de tout oiseau sauvage, d'aviculture de production, sportive ou ornementale. Encore plus particulièrement, « oiseau » au sens de l'invention peut s'entendre au sens d'une volaille telle qu'une oie, dinde, canard, poule, pintade, caille, pigeon, faisan et leurs petits ou de tout autre oiseau d'une taille et morphologie correspondante.

Ainsi, un « **mannequin d'apprentissage** », selon la présente invention, s'entend d'une figure reproduisant la taille la morphologie d'un oiseau tel que défini ci-dessus, et plus particulièrement comprenant des éléments figurant (définissant ou encore matérialisant) des pattes, de préférence deux, un corps, un cou et une tête d'un oiseau. Ainsi dans le mannequin dispositif de l'invention, les termes corps, cou, tête, pattes ou toute autre partie anatomique se réfèrent à des éléments du dit mannequin qui représentent, aux fins de l'exercice de dislocation cervicale, les différentes parties correspondantes du corps de l'animal.

Les termes « **manipulateur** » ou « **opérateur** » sont utilisés indifféremment. Ils se réfèrent à la personne manipulant le dispositif selon l'invention ou à la personne en charge de l'euthanasie d'un oiseau.

La « **dislocation cervicale** » fait référence à la dislocation du crâne et de la première vertèbre aboutissant à la séparation de la moelle épinière et du tronc cérébral. « Dislocation cervicale » fait également référence à une méthode d'euthanasie, visant à produire sur l'animal la lésion susmentionnée et qui, bien réalisée, entraîne une perte de conscience rapide et une mort non cruelle. La dislocation cervicale manuelle est réalisée sans outil. La dislocation cervicale manuelle d'un oiseau réalisée selon les directives et aboutissant à une mort instantanée dans le respect de la condition animale comprend les étapes suivantes i) Immobilisation de l'oiseau en tenant avec une main l'oiseau par les pattes au niveau des tarses et, entre l'index et le majeur ou le pouce et index de l'autre main, la tête de l'oiseau près des oreilles et contention contre le corps de l'opérateur, ii) positionnement de la tête de l'oiseau perpendiculairement au dos de l'oiseau iii) application, en une fois, d'une force verticale vers le bas et parallèle à l'axe du cou jusqu'à sentir la séparation du crâne et de la colonne vertébrale de l'oiseau.

La « **force de cisaillement** » ou force de déplacement, quand elle fait référence à un aimant, s'entend de la force appliquée parallèlement ou de façon oblique, de préférence parallèlement, par rapport à la surface de contact de l'aimant. La force d'adhérence s'entend de la force exercée perpendiculairement à la surface de contact. Il est généralement admis que la force de cisaillement correspond à entre 15% et 25% de la force d'adhérence d'un aimant.

La « **force prédéterminée** » correspond à la force correspondante à la force nécessaire et suffisante à appliquer pour réaliser une dislocation cervicale adéquate, c'est-à-dire sans décapitation mais au-delà de la simple élongation. Elle est fonction de la taille ou de l'espèce de l'animal et est aisément déterminable par l'homme de l'art.

Comme cela a été évoqué, la dislocation cervicale manuelle est une méthode d'euthanasie non cruelle et hygiénique. En outre, elle contribue à éviter les euthanasies de groupe, lors desquelles les animaux sont euthanasiés sans discernement, et à promouvoir une euthanasie raisonnée, plus en accord avec les standards actuels de respect de la vie animale. Néanmoins, pour être bien réalisée, elle nécessite l'entrainement de l'opérateur. En effet mal réalisée, il peut résulter des souffrances inacceptables pour l'animal, comme dans le cas d'écrasement ou d'élongation de la colonne par exemple, ou une décapitation posant des problèmes sanitaires et causant un traumatisme du manipulateur. En outre, l'échec d'une l'euthanasie respectueuse a également des conséquences psychologiques sur l'opérateur. De simple directives, des photographies ou des films, s'ils identifient le geste, ne permettent pas de placer l'opérateur dans des conditions de proprioception proches du réel et encore moins d'appréhender le dosage de la force nécessaire et suffisante à appliquer au regard de la résistance des tissus et les sensations tactiles associées à une dislocation adéquate.

L'invention propose un dispositif réutilisable qui permet l'acquisition par l'opérateur du geste technique de dislocation cervicale d'un oiseau, dans des conditions reproduisant ou se rapprochant des conditions réelles, et notamment reproduisant la proprioception et des sensations tactiles de l'opérateur en conditions réelles, lui permettant, notamment, d'acquérir la force nécessaire à appliquer pour obtenir une dislocation adéquate.

Sauf indication contraire, les différentes caractéristiques structurelles et fonctionnelles de chacune des mises en oeuvre décrites ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

### Mannequin d'entrainement à la dislocation cervicale manuelle d'un oiseau

Ainsi, selon **un premier aspect,** l'invention concerne donc un mannequin d'entrainement 1 à la dislocation cervicale manuelle d'un oiseau, ce mannequin reproduisant les différentes parties d'un oiseau qui sont nécessaires à la réalisation du geste technique de dislocation cervicale réalisé pour obtenir une perte de conscience rapide et une mort non cruelle en aboutissant à la séparation de la moelle épinière et du tronc cérébral. Ce mannequin comprend donc :
- un élément de préhension définissant les pattes 2 de l'oiseau fixé à un élément définissant le corps 3 de l'oiseau,
- le corps 3 comprenant une face arrière définissant le dos 31 et une face avant définissant le bréchet 32 de l'oiseau, sur lequel est fixé un élément de connexion longiligne définissant le cou 4 de l'oiseau,
- un élément de préhension définissant la tête 5 de l'oiseau.

Il est entendu que le mannequin selon l'invention peut comprendre des niveaux d'abstraction variables dans la représentation d'un oiseau et des différents éléments mentionnés ci-dessus, tant que ces éléments sont présents et permettent la réalisation du geste correspondant à la dislocation cervicale manuelle tel qu'il doit être effectué pour aboutir à une mort immédiate et sans souffrance de l'animal. Idéalement ces éléments ont des tailles, dans le mannequin 1 selon l'invention, dans des proportions relatives cohérentes avec celle d'un oiseau de la nature et contribuent au caractère immersif de l'exercice réalisé en utilisant le mannequin selon l'invention.

Ainsi, par exemple, l'élément de préhension définissant les pattes 2 de l'oiseau peut être constitué d'un seul élément qui correspond aux deux pattes de l'oiseau. Alternativement, l'élément de préhension définissant des pattes 2 est constitué des deux éléments individualisés définissant chacun une des deux pattes de l'oiseau, chacun fixés indépendamment à l'élément définissant le corps 3 de l'oiseau. Idéalement, ces éléments définissant des pattes ont une disposition et une taille permettant leur préhension par une main du manipulateur. Cela permet d'avoir la bonne position du corps de l'opérateur et de son bras et améliore l'efficacité de l'apprentissage avec le mannequin d'entrainement 1. Dans un autre exemple, et de manière avantageuse, l'élément définissant la tête de l'oiseau peut présenter des repères matérialisant les entrées des conduits auditifs de l'oiseau, qui sont des points de repère usuellement utilisés pour le bon placement des doigts dans le geste de dislocation cervicale.

Classiquement, l'élément définissant le corps 3 est un volume de forme oblongue, pour lequel on peut définir une face avant du corps de l'oiseau, qui se définit comme la partie du corps comprenant le bréchet et une face arrière. En effet, il est important de pouvoir définir la face avant et la face arrière de l'oiseau pour mettre en oeuvre une contention de l'oiseau et le geste de dislocation de manière adéquate.

Le mannequin 1 selon invention comprend un autre élément de préhension définissant une tête 5 de l'oiseau. L'élément de préhension définissant une tête 5 de l'oiseau est connecté à l'élément définissant le corps 3 par un élément de connexion longiligne, c'est-à-dire plus long que large, définissant le cou 4 de l'oiseau. Par exemple, le cou peut être constitué d'une seule pièce, de préférence souple. Il peut alternativement être constitué de différents éléments articulés qui permettent à la tête du mannequin 1 selon l'invention une mobilité proche de celle de l'oiseau. Cela permet avantageusement au manipulateur d'apprendre sur quelle partie du cou doit être appliqué la force. Ces éléments peuvent être des éléments articulés de type maillon (comme dans le mannequin illustré à la figure 1), joints de cardans ou rotules à 180°, qui, de manière avantageuse, miment la flexibilité du cou d'un oiseau contribuant ainsi à l'efficacité de l'entrainement. Un exemple d'éléments articulés de type maillon est présenté dans le mode de réalisation présenté à la figure 1 qui présente un mannequin ou les éléments constituant le cou sont visibles. L'élément définissant le cou, quand il comprend des éléments articulés tels que mentionnés ci-dessus, peut comprendre entre 2 et 10 éléments, par exemple, 2, 3, 4, 5, 6, 7, 8, 9, ou 10 éléments.

Dans le mannequin 1 selon l'invention, comme présenté notamment en lien avec les figures 1 ou 2, le cou 4 et la tête 5 sont connectés l'un à l'autre par un moyen de fixation séparable 6 comprenant au moins un premier élément 61 solidaire de la tête 5 et au moins un deuxième élément 62 solidaire du cou 4, lesdits premier et deuxième éléments 61, 62 étant agencés de sorte à connecter de façon réversible ledit cou 4 à ladite tête 5.

Par moyen de fixation séparable, il faut entendre tout moyen de fixation qui comprend deux éléments distincts 61,62 qui permettent la connexion, lorsqu'ils interagissent ensemble, de deux parties distinctes et séparées d'un objet auxquelles ils sont respectivement associés, en l'occurrence l'élément de préhension figurant la tête 5 d'une part et l'extrémité de l'élément de connexion figurant le cou 4 non connectée au corps d'autre part. Ainsi, quand les éléments 61, 62 sont séparés ou déconnectés, le mannequin imite la configuration selon laquelle la tête de l'oiseau est disloquée, c'est à dire séparée de la colonne vertébrale. Lorsque les éléments 61, 62 interagissent, ou en d'autres termes, sont connectés, le mannequin imite une configuration selon laquelle la tête de l'oiseau est associée au tronc cérébral, et donc dans laquelle il n'y a pas de dislocation cérébrale.

Une connexion réversible via le moyen de fixation séparable s'entend d'une connexion destinée à être mise en oeuvre et interrompue successivement un grand nombre de fois sans endommager les éléments du moyen de fixation séparable qui interagissent. Cette répétabilité permet l'apprentissage du geste de dislocation cervicale.

Préférentiellement, le moyen de fixation séparable ne nécessite pas d'outillage particulier pour passer de la configuration dans laquelle les éléments 61, 62 sont séparés à la configuration dans laquelle ils interagissent. En d'autres termes, aucun outillage n'est nécessaire pour connecter ou reconnecter le cou 4 à la tête 5 du mannequin une fois ceux-ci séparés, ce qui facilite la répétabilité et l'efficacité de l'entrainement.

Des types de moyens de fixation réversibles sont, par exemple, des moyens d'assemblage de type crochet-boucle (de type velcro^{®}) ou encore des moyens de fixation constitués d'éléments complémentaires qui interagissent mécaniquement par simple pression de l'un contre l'autre, ou encore, par exemple, par emboitement/déboitement. Un autre moyen de fixation séparable convenable pour le mannequin selon l'invention peut utiliser la force magnétique pour connecter les deux éléments qui sont magnétiquement complémentaires.

De manière particulièrement avantageuse, lorsque le au moins un premier élément 61 solidaire de la tête 5 et le au moins un deuxième élément 62 solidaire du cou 4 sont déconnectés, c'est-à-dire lorsque le mannequin 1 est dans une configuration selon laquelle la tête est disloquée, alors un témoin indicateur de la séparation de la tête 5 et du cou 4, est détectable. Par exemple un tel témoin peut être un indicateur visuel porté par lesdits éléments 61, 62 mais uniquement visible à la séparation de ceux-ci. Egalement, le témoin indicateur peut être un témoin tactile matérialisé par, au toucher effectué par l'opérateur, la détection d'un espace, ou d'une réduction de l'épaisseur de la jonction entre l'élément définissant la tête 5 et l'élément définissant le cou 4 ; ledit espace, ou ladite réduction de l'épaisseur étant non présent(e) lorsque le cou 4 et la tête 5 ne sont pas dans une configuration selon laquelle la tête est disloquée. Cet indicateur tactile est particulièrement préféré.

Il est entendu que lesdits au moins premier et deuxième éléments 61, 62 du moyen de fixation séparable 6 sont agencés de manière à permettre le déplacement de la tête 5 vers la face arrière du mannequin d'entrainement 1, car ce déplacement fait partie de la procédure de dislocation cervicale. En effet, comme évoqué ci-dessus, la dislocation cervicale ne peut être opérée de manière adéquate, c'est-à-dire sans souffrance de l'animal et sans écrasement des cervicales, sans le positionnement de la tête vers l'arrière.

Enfin, il est entendu que le premier et le deuxième élément 61, 62 du moyen de fixation séparable 6 sont adaptés pour se désolidariser lorsqu'une force prédéterminée est appliquée sur la tête parallèlement à l'axe longitudinal du cou 4 (ou force de cisaillement). Préférentiellement, la force prédéterminée est comprise entre 4,9 N et 98,1 N, entre 19,6 N et 58,4 N, entre 25,0 N et 53,0 N, préférentiellement entre 31,0 N et 47,0 N, préférentiellement la force prédéterminée est de 39 N.

Dans un mode de réalisation préféré, le premier et/ou le deuxième élément 61, 62 du moyen de fixation séparable 6 comprend un aimant permanent à aimantation axiale qui interagit avec sa contrepartie dans ledit premier ou deuxième élément, et qui nécessite pour être désolidarisé de sa contrepartie l'application d'une force de cisaillement telle que mentionnée ci-dessus. Ainsi, plus particulièrement, ledit aimant présente une force de cisaillement comprise entre 4,9 N et 98,1 N, entre 19,6 N et 58,4 N, préférentiellement entre 25,0 N et 53,0 N, encore plus préférentiellement entre 31,38 N et 47,07 N, préférentiellement, de manière particulièrement préférée, la force prédéterminée est de 39 N. En effet, les forces magnétiques reproduisent de manière particulièrement fidèle les sensations ressenties par le manipulateur lors de la dislocation cervicale réalisée sur un animal réel qui comprend une résistance importante avant une rupture brusque de la cohésion des pièces liées par la force magnétique.

Tout type d'aimant permanent est utilisable dans le moyen de fixation séparable de l'invention, tels que les aimants en ferrite ou les aimants comprenant du néodyme. Néanmoins ces aimants doivent avoir leur plus grande dimension compatible avec le dimensionnement, chez un animal réel, du cou et de l'articulation entre la base du crâne et la cervicale qui y est connectée. Ainsi, l'aimant est, dans sa plus grande dimension, d'une taille d'au maximum de 30 mm, de préférence inférieure à 25mm, inférieure à 20 mm, de préférence inférieure ou égale à 15 mm. Les aimants comprenant du néodyme sont généralement composés d'un alliage fer-néodyme (tel que Nd₂Fe₁₄B) et sont couramment disponibles dans le commerce. Ces aimants sont particulièrement puissants. Ils permettent donc d'obtenir pour des petites tailles d'aimant (et en corolaire, des forces de cisaillements) des forces d'adhérence particulièrement importantes. Cela est particulièrement avantageux lorsqu'il s'agit de mimer la taille et la morphologie de la jonction de la colonne vertébrale avec la base du crâne d'un oiseau. Ces aimants comprenant du néodyme permettent donc d'obtenir plus aisément, dans le mannequin 1 selon l'invention, un moyen de fixation séparable en accord avec le dimensionnement chez un animal réel de l'articulation entre la base du crâne d'un oiseau et la cervicale qui y est connectée.

La contrepartie de l'aimant (c'est-à-dire, dans le dispositif de l'invention, l'élément 61 ou 62) peut être une pièce métallique ou un autre aimant. Dans un mode de réalisation préféré, le premier et le deuxième élément 61, 62 du moyen de fixation séparable 6 comprennent donc des aimants permanents à aimantation axiale agencés de manière à s'attirer mutuellement. Dans un mode de réalisation particulièrement préféré, ces aimants s'attirent par des surfaces de taille et de forme identiques et/ou complémentaires. Une forme particulièrement préférée pour une telle surface est le disque, cette forme est particulièrement adaptée au pivotement de l'élément figurant la tête selon l'axe de ce disque. L'homme de l'art saura adapter la forme des moyens de fixation 61, 62, de manière à recevoir l'aimant et sa contrepartie de façon à permettre ce pivotement.

Dans un mode de réalisation particulier, le moyen de fixation séparable 6 est tel qu'illustré dans une mise en oeuvre telle qu'à la figure 3A et à la figure 3B :
- le premier élément 61 solidaire de la tête 5 du moyen de fixation séparable 6 comprend un support 611 comprenant deux faces présentant chacune une face aimantée 612, 613 d'un aimant permanent à aimantation axiale,
- le deuxième élément 62 solidaire du cou 4 du moyen de fixation séparable 6 comprend deux bras 621, 622 définissant un espace, entre les bras, apte à recevoir le support 611, chacun des bras 621, 622 comprenant un aimant 631, 632 permanent à aimantation axiale,
l'aimant 631, 632 de chacun des bras 621, 622, étant agencé de manière à s'attirer respectivement avec une face aimantée 612, 613 de l'aimant permanent à aimantation axiale du support 611 qui lui fait face quand le support 611 est placé entre les bras 621, 622. Ce mode de réalisation est particulièrement préféré car il reproduit de manière particulièrement fiable les sensations perçues lors de la dislocation cervicale d'un oiseau.

Selon une mise en oeuvre particulière, dans ce mode de réalisation préféré, les faces aimantées 612, 613 sont les deux faces (et sont donc d'une polarité opposée), d'un même aimant inséré dans et traversant le support 611.

Selon une mise en oeuvre alternative, dans le moyen de fixation séparable 6 :
- le premier élément 61 solidaire de la tête 5 du moyen de fixation séparable 6 comprend un support 611 comprenant deux faces présentant chacune un aimant 612, 613 permanent à aimantation axiale,
- le deuxième élément 62 solidaire du cou 4 du moyen de fixation séparable 6 comprend deux bras 621, 622 définissant un espace, entre les bras, apte à recevoir le support 611, chacun des bras 621, 622 comprenant un aimant permanent à aimantation axiale,
l'aimant de chacun des bras 621, 622, étant agencé de manière à s'attirer avec un des aimants du support 611 qui lui fait face quand le support 611 est placé entre les bras 621, 622.

Dans ces deux modes de réalisation, les forces de cisaillement choisies pour ces aimants, sont telles que la somme des forces de cisaillement qui les caractérisent correspond à la force prédéterminée telle que stipulée ci-dessus. Ainsi dans le mode de réalisation de la figure dans lequel les faces aimantées 612, 613 serait les deux faces (et donc d'une polarité opposées), d'un même aimant inséré dans et traversant le support 611, des forces de cisaillement pour chacun des aimants 631 ; 632 et celui du support 611 pourraient être identiques et comprises, par exemple, entre 1,23 N et 24,52 N, entre 4,9 N et 14,71 N, préférentiellement entre 6,37 N et 13,24 N, encore plus préférentiellement entre 7,85 N et 11,77 N, De manière particulièrement préférée, dans ce mode de réalisation, chacun des aimants présente une force de cisaillement de 9,81 N. Alternativement, les différents aimants peuvent présenter des forces de cisaillement différentes spécifiques, l'essentiel étant que la force à appliquer par l'opérateur, qui est définie comme la somme des forces à appliquer pour séparer l'élément figurant la tête 5 de l'élément figurant le cou 4 corresponde à la force prédéterminée.

Dans ces deux modes de réalisation, témoin indicateur de la séparation de la tête 5 et du cou 4 peut être un indicateur visuel matérialisé par, par exemple, une couleur particulière d'au moins une des faces aimantées 611,612, qui sont visibles uniquement quand le dispositif est dans une configuration selon laquelle la tête 5 est disloquée du cou 4.

Dans le mannequin 1 selon l'invention, avantageusement, l'élément figurant la tête 5 peut librement bouger de l'avant vers l'arrière du dispositif et inversement, cela permet à l'opérateur de trouver de lui-même la position adéquate de la tête pour effectuer une dislocation adéquate. Ainsi, plus particulièrement, dans le mode de réalisation selon la figure 3A et 3B, l'élément figurant la tête peut se déplacer de l'avant vers l'arrière ou inversement en effectuant une rotation selon l'axe des aimants des premiers et deuxième éléments quand ils interagissent ensemble.

L'angle à appliquer pour réaliser une dislocation adéquate est défini dans les procédures comme étant de 90° vers l'arrière de l'animal, par rapport à l'axe du cou. Avantageusement, dans le dispositif de l'invention, le moyen de fixation séparable 6 comprend un moyen 7 empêchant la dissociation du premier et deuxième élément 61, 62 si l'angle entre l'élément figurant la tête 5 et l'axe de l'élément figurant le cou 4, n'est pas compris entre 80° et 100° vers l'arrière du mannequin d'entrainement 1, de préférence n'est pas de 90°C vers l'arrière du mannequin d'entrainement 1. Empêcher la dissociation du premier et deuxième élément 61, 62 si la tête du mannequin n'est pas dans la position adéquate permet à l'opérateur d'acquérir facilement un automatisme quant à la bonne position de la tête de l'animal pour réaliser avec succès la dislocation cervicale.

Dans un mode de réalisation particulier dans lequel le moyen de fixation séparable 6 est tel que représenté aux figures 3A et 3B, le support 611 et les bras 621 et 622 sont complémentaires et profilés de telle manière que le support 611 ne peut s'insérer entre les bras de l'élément 62 ou être séparé des bras de l'élément 62 que lorsque l'élément figurant la tête 5 et l'axe de l'élément figurant le cou 4, est compris entre 80° et 100°, de préférence est de 90°C, vers l'arrière du mannequin d'entrainement 1. Ainsi, un exemple d'un moyen 7 empêchant la dissociation du premier et deuxième élément 61, 62 si l'angle entre l'élément figurant la tête 5 et l'axe de l'élément figurant le cou 4, n'est pas compris entre 80° et 100° vers l'arrière du mannequin d'entrainement 1, voire n'est pas de 90°C vers l'arrière du mannequin d'entrainement 1 est fourni à la figure 3A : le moyen empêchant la dissociation des éléments 61,62 est une forme biseautée en surépaisseur du support 611 qui empêche d'insérer ou de retirer le support 611 entre les bras 621 et 622 quand l'angle entre l'élément figurant la tête 5 et l'axe de l'élément figurant le cou 4, ne forme pas un angle compris entre 80° et 100° vers l'arrière du mannequin d'entrainement 1, voire, de préférence, n'est pas de 90°C. La forme biseautée en surépaisseur vient entourer partiellement les aimants des bras 621 et 622 et empêche ainsi la dissociation quand l'angle de l'élément figurant la tête avec celui figurant le cou n'est pas entre 80° et 100°, voire, de préférence, de 90° vers l'arrière du mannequin. Quand l'angle imposé entre l'élément figurant la tête et celui figurant le cou n'est pas entre 80° et 100°, de préférence de 90° vers l'arrière du mannequin le support 611 ne peut pas être délogé de l'espace entre les bras 621 et 622 tel que cela est illustré figure 4.

Avantageusement, le mannequin d'entrainement 1 selon l'invention comprend en outre au moins un moyen 8 permettant de maintenir la cohésion de la tête 5 avec le mannequin d'entrainement 1 une fois les premier et deuxième éléments 61, 62 dissociés. En d'autres termes, malgré la dissociation des éléments 61, 62 du moyen de fixation séparable, le moyen 8 permet que la tête 5 continue à faire partie du mannequin d'entrainement 1. Cela présente l'avantage de ne pas avoir de séparation de l'élément figurant la tête 5 du reste du corps, malgré la séparation de l'élément figurant la tête de l'élément figurant le cou. Cela est plus en accord avec la réalité de la dislocation cervicale qui ne doit pas aboutir à une décapitation de l'animal pour les raisons susmentionnées, et présente en outre l'avantage d'éviter une perte d'élément du mannequin. Enfin, cela facilite le rétablissement de la connexion entre les éléments 61, 62 respectivement solidaire de la tête 5 et solidaire du cou 4 du moyen de fixation séparable.

Le moyen 8 permettant de maintenir la cohésion de la tête 5 avec le mannequin d'entrainement 1 peut comprendre un tuyau entourant le cou 4 et fixé, à une de ses extrémités, au corps 3 et, à l'autre de ses extrémités, à la tête 5, l'élément 61 ou 62. Ce tuyau peut être en matériau souple tel que, un tissu, du caoutchouc ou tout autre polymère souple. Ce tuyau présente l'avantage en outre de masquer le ou les éléments constituant le cou donc de renforcer la ressemblance du mannequin avec un oiseau et donc le caractère immersif des exercices réalisés avec le mannequin.

Le moyen 8 qui permet de maintenir la cohésion de la tête 5 avec le mannequin d'entrainement 1 peut comprendre un câble métallique fixé, d'une part, au corps 3 ou au cou 4 et, d'autre part, à la tête 5.

Le moyen 8 qui permet de maintenir la cohésion de la tête 5 avec le mannequin d'entrainement 1 peut en outre comprendre au moins un ressort fixé ou relié, à une de ses extrémités, au corps 3 ou au cou 4 et, à l'autre de ses extrémités, à la tête 5.

Un exemple d'un tel mode de réalisation est présenté en lien avec la figure 1 : deux ressorts de compression agencés de part et d'autre de maillons constituant le cou sont reliés via un câble métallique à l'élément 61 solidaire de l'élément figurant la tête 5. Préférentiellement, les ressorts sont agencés pour être comprimés lorsque les éléments du moyen fixation séparable 6 sont séparés (ce qui correspond à la dislocation cervicale). Le fil métallique sert d'attache du cou 4 à un élément de l'élément définissant la tête 5 tel que par exemple, le support 611, qui peut comprendre un serre câble.

Dans un autre mode de réalisation, le moyen 8 permettant de maintenir la cohésion de la tête 5 avec le mannequin d'entrainement 1 est constitué d'un câble métallique fixé, à une extrémité, à l'élément définissant le corps 3 de l'oiseau et, à l'autre extrémité, à l'élément 61 solidaire de l'élément figurant la tête 5, sur lequel viennent s'enfiler des éléments articulés constituant l'élément de connexion définissant le cou 4. Le câble est alors entouré d'une gaine, telle que par exemple, une gaine de frein de bicyclette, qui protège avantageusement les éléments articulés du cou 4 et / ou le câble de toute usure. Avantageusement la gaine peut être fixée sur au moins le premier élément articulé et le dernier élément articulé du cou 4 de manière à maintenir solidaires l'ensemble des éléments articulés du cou 4. Dans ce mode de réalisation, l'extrémité du câble du moyen 8, permettant de maintenir la cohésion de la tête 5 avec le mannequin d'entrainement 1, et qui est fixée au niveau de l'élément définissant le corps 3 de l'oiseau, est terminée par un ressort de compression et un serre-câble, agencés de telle sorte que ledit ressort est comprimé lors de la dislocation (la séparation) des éléments 61, 62 du moyen de fixation séparable 6 et donc lors la traction sur le câble, qui est fixé à son autre extrémité à un élément de l'élément définissant la tête tel que par exemple, le support 611, qui peut, en outre, comprendre un serre câble. Un exemple d'un tel mode de réalisation est illustré aux figures 7A et 7B, la figure 7A présentant le dispositif en configuration non disloquée », la figure 7B représentant le dispositif en configuration « disloquée ».

Le ou les ressorts permettent à l'opérateur de ressentir une légère suspension et a donc pour effet d'atténuer la sensation mécanique ressentie lors de la séparation des éléments 61, 62 de l'élément de fixation séparable 6. En outre, il reproduit sensiblement la sensation d'élasticité et la sensation de résistance des tissus de l'animal ressenties lors de la dislocation cervicale. En d'autres termes, dans les modes de réalisation ci-dessus le ressort du moyen 8 permettant de maintenir la cohésion de la tête 5 avec le mannequin d'entrainement 1 contribue également à améliorer l'expérience de l'opérateur à l'utilisation du mannequin selon l'invention. De manière particulièrement avantageuse, le moyen 8 permettant de maintenir la cohésion de la tête 5 avec le mannequin d'entrainement 1 peut permettre également une reconnexion plus aisée de l'élément 61 avec l'élément 62.

Le (ou les) ressort est avantageusement choisi de telle sorte que la différence de longueur entre le ressort comprimé et le ressort relâché (aussi dénommée « débattement") corresponde à la distance de séparation attendue pour une dislocation adéquate, c'est-à-dire sans décapitation, tout en étant adapté à la taille des pièces et la taille de l'animal modélisé. La taille du ressort est avantageusement choisie de manière à produire un débattement d'une longueur supérieure à celle nécessaire à la dislocation (la séparation) des éléments 61, 62 du moyen de fixation séparable 6 supérieur, ce qui améliore la sensation physique de l'opérateur. Néanmoins, préférentiellement, cette longueur de débattement est suffisamment courte pour faciliter la reconnexion de l'élément 61 avec l'élément 62. Par exemple, le débattement est supérieur ou égal à 15 mm, à 20 mm, à 25 mm, à 30 mm. Par exemple, également, le ressort mesure de 30 mm à 90 mm de long, de préférence de 40 mm à 80 mm, de manière préférée de 60 à 70 mm. De manière particulièrement préférée, le ressort mesure, quand relâché, 60 mm de long, 0.44 mm de diamètre intérieur et 0.8 mm d'épaisseur, et mesure, comprimé, 35 mm (soit un débattement de 25 mm). Un ressort de ce type est particulièrement adapté au moyen 8 permettant de maintenir la cohésion de la tête 5 avec le mannequin d'entrainement 1 constitué d'un câble sur lequel viennent s'enfiler des éléments articulés constituant l'élément de connexion définissant le cou 4 tel que décrit ci-dessus. Tout matériau adéquat pour une utilisation dans les ressorts de compréhension est utilisable dans le dispositif selon l'invention. De manière préférée, le (ou les) ressort(s) est en acier.

Dans un mode de réalisation particulier, le mannequin 1 selon l'invention peut comprendre au moins un aimant solidaire de la tête 5 d'une part et au moins un aimant solidaire du cou 4 d'autre part, lesdits aimants étant agencés pour s'attirer mutuellement lorsque les éléments 61 et 62 sont déconnectés, c'est-à-dire quand la tête 5 du mannequin est dans une configuration correspondant à une dislocation cervicale. Cela a pour effet de maintenir l'élément solidaire de la tête 61 et l'élément solidaire du cou 62 dans une position apte à la leur reconnexion, c'est-à-dire apte à faciliter la restauration du mannequin dans une configuration correspondant à une tête non disloquée. Cela contribue augmenter la cadence de répétabilité de l'entrainement et donc la bonne acquisition par l'opérateur du geste de dislocation cervicale.

Par exemple, dans le mode de réalisation particulier selon les figures 5 ou 6 dans lequel :
- le premier élément 61 solidaire de la tête 5 du moyen de fixation séparable 6 comprend un support 611 comprenant deux faces présentant chacune une face aimantée 612, 613 d'un aimant permanent à aimantation axiale,
- le deuxième élément 62 solidaire du cou 4 du moyen de fixation séparable 6 comprend deux bras 621, 622 définissant un espace, entre les bras, apte à recevoir le support 611, chacun des bras 621, 622 comprenant un aimant permanent à aimantation axiale,
le support 611 comprend à son extrémité un ou des aimants 9 agencés pour rester connectés (c'est-à-dire s'attirer mutuellement) avec les aimants des bras 621, 622, lorsque le mannequin est en configuration selon laquelle la tête est disloquée (c'est-à-dire les éléments 61, 62 sont déconnectés). Ainsi dans le mode de réalisation illustrés aux figures 5 et 6, le support 611 est adapté pour que le ou les aimants 9 restent en connexion avec les aimants des bras 621, 622 lorsque l'élément figurant la tête est dans une configuration correspondant à une dislocation (c'est à dire quand les éléments 61 et 62 sont déconnectés), tel que cela est représenté figure 4.

Dans un mode de réalisation avantageux, les éléments 61, 62 du moyen de fixation séparable 6 sont agencés de telles sorte que lorsque ceux-ci sont déconnectés, une dépression caractérisée par une diminution de la taille de la section du cou à la base de la tête 5 au niveau de l'élément de fixation séparable 6 peut être détectée au toucher. Cela est particulièrement avantageux car dans les conditions du réel une telle différence peut être détectée.

Dans un mode de réalisation avantageux, le mannequin selon l'invention comprend un moyen empêchant la rotation de l'élément figurant le cou selon son axe longitudinal. En contribuant à la bonne orientation respective des éléments figurant la tête et le corps, cela contribue à la préhension de l'animal de manière adéquate par l'opérateur et, partant la bonne assimilation du geste.

Dans un mode de réalisation préféré, comme évoqué ci-dessous, dans le mannequin 1 selon l'invention l'élément de préhension définissant les pattes 2 comprend deux éléments individualisés définissant chacun une des deux pattes de l'oiseau, chacun fixés indépendamment à l'élément définissant le corps 3 de l'oiseau. Dans un mode de réalisation, lesdits éléments individualisés sont fixés directement sur l'élément définissant le corps. Dans ce mode de réalisation, les éléments de préhension définissant les pattes ne sont donc pas mobiles. Bien que tout à fait opérationnel, ce mode de réalisation n'est pas un mode préféré car il présente les désavantages i) de générer des zones de pression au niveau de la jonction des éléments qui constituent une zone de fragilité du dispositif, ii) de ne pas reproduire la mobilité de l'animal naturel. Aussi, de manière encore plus avantageuse, chacun des éléments individualisés comprend à sa base un moyen permettant l'articulation dudit élément avec l'élément définissant le corps. Dans un mode de réalisation encore plus particulier, les deux éléments sont reliés l'un à l'autre par un câble passant à l'intérieur de l'élément figurant le corps, qui permet ainsi d'éviter une fixation directe sur l'élément figurant le corps et donc d'éviter de créer une zone de fragilité du dispositif qui est par ailleurs déjà soumis à des forces.

Comme évoqué, le mannequin selon invention est un outil qui permet l'acquisition du geste d'euthanasie par dislocation cervicale manuelle des oiseaux. Dans cette procédure, le ressenti de l'opérateur est crucial et permet le dosage d'une force suffisante et nécessaire à la dislocation cervicale efficace, c'est-à-dire aboutissant à la mort immédiate de l'animal sans souffrance et sans décapitation. Néanmoins, seules l'expérience et la mémorisation du geste et des sensations ressenties par l'opérateur lors de la dislocation permettent de parvenir à un taux de succès acceptable pour implémenter la méthode dans des conditions réelles. Le mannequin développé par les inventeurs répond particulièrement à ce besoin. Il permet en outre une répétabilité de l'acte jusqu'à une maitrise parfaite du geste, ce que ne permet pas, pour des raisons évidentes, un entrainement sur des animaux, vivants ou même morts.

Ainsi ce mannequin est un outil particulièrement adapté à l'apprentissage du geste d'euthanasie par dislocation manuelle des oiseaux, dans les domaines des élevages avicoles, ou le soin vétérinaire.

### Procédé d'entrainement à la dislocation cervicale manuelle d'un oiseau

Ainsi, selon un deuxième aspect, l'invention concerne donc l'utilisation du mannequin 1 selon l'invention dans un procédé d'entrainement à la dislocation cervicale manuelle des oiseaux.

Plus particulièrement, comme présenté en lien avec la figure 8, l'invention concerne un procédé d'entrainement 100 à la dislocation cervicale manuelle d'un oiseau, comprenant au moins un essai comprenant les étapes suivantes :
- Fourniture 110 d'un mannequin d'entrainement 1 selon l'une quelconque des revendications précédentes,
- Maintenir 120 les pattes 2 du mannequin d'entrainement 1 dans une main et la tête 5 du mannequin d'entrainement 1 dans l'autre main, le pouce et l'index ou l'index et le majeur de la main positionnée sur la tête 5 du mannequin étant positionnés sur la tête 5 de part et d'autre du cou, le mannequin d'entrainement 1 étant maintenu selon l'axe vertical, la tête 5 en bas et les pattes 2 en haut et de manière à ce que le dos du mannequin d'entrainement 1 soit positionné vers la main qui tient la tête 5 du mannequin d'entrainement 1,
- Plier 130 le cou 4 du mannequin d'entrainement 1 à 90° vers l'arrière du mannequin d'entrainement 1,
- Exercer une traction 140 de la tête 5 du mannequin d'entrainement 1 vers le bas tout en maintenant la pliure du cou 4 du mannequin d'entrainement 1 à 90° jusqu'à la séparation du moyen de fixation séparable 6 au niveau de la jonction entre la tête 5 et le cou 4,
- Vérifier la présence d'une dépression 150 dans le cou 4 à la base de la tête 5,
- Optionnellement : vérifier la visibilité de l'indicateur visuel 160,
- Optionnellement : remettre en place la connexion 170 de la tête 5 avec le cou 4 via le moyen de fixation séparable 6,
dans lequel, en l'absence d'une dépression à la base de la tête 5, l'essai est invalidé.

La dépression dont la présence et vérifiée par l'opérateur après l'étape de traction de la tête correspond à une diminution de la taille de la section du cou à la base de la tête 5 au niveau de l'élément de fixation séparable 6. Dans certains modes de réalisation, la dépression peut correspondre également à un espace entre l'élément figurant de cou et celui figurant la tête. Avantageusement, la visibilité d'un indicateur visuel tel que mentionné peut également permettre de valider l'essai.

Dans un mode de réalisation particulier du procédé d'entrainement 100 selon l'invention, pour être plus proche des conditions réelles du geste et ainsi renforcer l'aspect immersif de l'exercice, une étape supplémentaire consistant à tendre le cou du mannequin d'entrainement 1 peut être rajoutée, avant de plier 130 le cou 4 du mannequin d'entrainement 1 à 90° vers l'arrière du mannequin d'entrainement 1 après l'étape de maintien 120.

Un tel essai peut être réalisé autant de fois que nécessaire jusqu'à arriver à un taux d'échec acceptable pour la pratique. Cette méthode est donc particulièrement adaptée à un apprentissage efficace de geste de dislocation cervicale dans le respect des procédures et le respect de la condition animale et permettra au manipulateur, en condition réelles, d'effectuer ce geste en toute confiance et sans stress, ce qui permet de limiter l'impact psychologique de ce geste et contribue à sa bonne exécution.

Le mannequin selon l'invention peut faire l'objet de nombreuses variantes et applications autres que celles décrites ci-dessus. Notamment, l'homme du métier comprendra qu'en fonction de la taille ou de l'espèce d'oiseau considérée, notamment, l'élément de fixation séparable peut être adapté notamment quant à la force prédéterminée à appliquer pour obtenir une dislocation satisfaisante. En particulier, sauf indication contraire, les différentes caractéristiques structurelles et fonctionnelles de chacune des mises en oeuvre décrites ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Mannequin d'entrainement (1) à la dislocation cervicale manuelle d'un oiseau comprenant :
- un élément de préhension définissant les pattes (2) de l'oiseau fixé à un élément définissant le corps (3) de l'oiseau,
- le corps (3) comprenant une face arrière définissant le dos (31) et une face avant définissant le bréchet (32) de l'oiseau , sur lequel est fixé un élément de connexion longiligne définissant le cou (4) de l'oiseau,
- un élément de préhension définissant la tête (5) de l'oiseau,
**caractérisé en ce que**
- ledit cou (4) et ladite tête (5) sont connectés l'un à l'autre par un moyen de fixation séparable (6) comprenant au moins un premier élément (61) solidaire de la tête (5) et au moins un deuxième élément (62) solidaire du cou (4), lesdits premier et deuxième élément (61, 62) étant agencés de sorte à connecter de façon réversible ledit cou (4) à ladite tête (5),
- lesdits au moins premier et deuxième éléments (61, 62) du moyen de fixation séparable (6) sont agencés de manière à permettre le déplacement de la tête (5) vers la face arrière du mannequin d'entrainement (1), et
- le premier et le deuxième élément (61, 62) du moyen de fixation séparable (6) étant adaptés pour se désolidariser lorsqu'une force prédéterminée est appliquée sur la tête parallèlement à l'axe longitudinal du cou (4).

2. Mannequin d'entrainement (1) selon la revendication 1, **caractérisé en ce que** le premier et/ou le deuxième élément (61, 62) du moyen de fixation séparable (6) comprend un aimant permanent à aimantation axiale.

3. Mannequin d'entrainement (1) selon la revendication 2, **caractérisé en ce que** le premier et le deuxième élément (61, 62) du moyen de fixation séparable (6) comprennent chacun au moins un aimant permanent à aimantation axiale, lesdits au moins un aimant étant agencés de manière à s'attirer mutuellement.

4. Mannequin d'entrainement (1) selon la revendication 3, **caractérisé en ce que**
- le premier élément (61) solidaire de la tête (5) du moyen de fixation séparable (6) comprend un support (611) comprenant deux faces présentant chacune une face aimantée (612, 613) d'au moins un aimant permanent à aimantation axiale,
- le deuxième élément (62) solidaire du cou (4) du moyen de fixation séparable (6) comprend deux bras (621, 622) définissant un espace, entre les bras, apte à recevoir le support (611), chacun des bras (621, 622) comprenant un aimant (631, 632) permanent à aimantation axiale,
l'aimant de chacun des bras (621, 622), étant agencé de manière à attirer la face aimantée de l'au moins un aimant du support (611) qui lui fait face quand le support (611) est placé entre les bras (621, 622).

5. Mannequin d'entrainement (1) selon l'une des revendications 3 ou 4, **caractérisé en ce que** chacun des aimants permanents a une force de cisaillement comprise entre 1,23 N et 24,52 N, de préférence de 11,77 N.

6. Mannequin d'entrainement (1) selon l'une quelconque des revendications précédentes, **caractérisé en ce que** le moyen de fixation séparable (6) comprend un moyen (7) empêchant la dissociation du premier et du deuxième élément (61, 62) si l'angle entre la tête (5) et l'axe du cou (4), vers l'arrière du mannequin d'entrainement (1) n'est pas compris entre 80° et 100°.

7. Mannequin d'entrainement (1) selon l'une quelconque des revendications précédentes, comprenant en outre au moins un moyen (8) permettant de maintenir la cohésion de la tête (5) avec le mannequin d'entrainement (1) une fois les premier et deuxième éléments (61, 62) dissociés.

8. Mannequin d'entrainement (1) selon la revendication 7, **caractérisé en ce que** le au moins un moyen (8) qui permet de maintenir la cohésion de la tête (5) avec le mannequin d'entrainement (1) comprend un câble fixé, d'une part, au corps (3) ou au cou (4) et, d'autre part, à la tête (5).

9. Mannequin d'entrainement (1) selon l'une des revendications 7 ou 8, **caractérisé en ce que** le au moins un moyen (8) qui permet de maintenir la cohésion de la tête (5) avec le mannequin d'entrainement (1) comprend au moins un ressort fixé ou relié, à une de ses extrémités, au corps (3) ou au cou (4) et, à l'autre de ses extrémités, à la tête (5).

10. Mannequin d'entrainement (1) selon l'une quelconque des revendications précédentes **caractérisé en ce que** le au moins un premier élément (61) et/ou le au moins un deuxième élément (62) comprend un témoin indicateur de la séparation de la tête (5) et du cou (4), tel qu'un indicateur visuel uniquement visible à la séparation desdits éléments.

11. Procédé d'entrainement (100) à la dislocation cervicale manuelle d'un oiseau comprenant au moins un essai comprenant les étapes suivantes :
- Fourniture (110) d'un mannequin d'entrainement (1) selon l'une quelconque des revendications 1 à 10,
- Maintenir (120) les pattes (2) du mannequin d'entrainement (1) dans une main et la tête (5) du mannequin d'entrainement (1) dans l'autre main, le pouce et l'index ou l'index et le majeur de la main positionnée sur la tête (5) du mannequin étant positionnés sur la tête (5) de part et d'autre du cou, le mannequin d'entrainement (1) étant maintenu selon l'axe vertical, la tête (5) en bas et les pattes (2) en haut et de manière à ce que le dos du mannequin d'entrainement (1) soit positionné vers la main qui tient la tête (5) du mannequin d'entrainement (1),
- Plier (130) le cou (4) du mannequin d'entrainement (1) à 90° vers l'arrière du mannequin d'entrainement (1),
- Exercer une traction (140) de la tête (5) du mannequin d'entrainement (1) vers le bas tout en maintenant la pliure du cou (4) du mannequin d'entrainement (1) à 90° jusqu'à la séparation du moyen de fixation séparable (6) au niveau de la jonction entre la tête (5) et le cou (4),
- Vérifier la présence d'une dépression (150) dans le cou (4) à la base de la tête (5),
- Optionnellement : vérifier la visibilité de l'indicateur visuel (160),
- Optionnellement : remettre en place la connexion (170) de la tête (5) avec le cou (4) via le moyen de fixation séparable (6),
dans lequel, en l'absence d'une dépression à la base de la tête (5), l'essai est invalidé.
